(19) Europäisches Patentamt
European Patent Office
Office européen des brevets

(11) Publication number: **0 261 574 B1**

(12) **EUROPEAN PATENT SPECIFICATION**

(45) Date of publication of patent specification: **13.11.91**

(51) Int. Cl.⁵: **C08F 283/08**, C08L 51/08, C08G 65/48

(21) Application number: **87113543.0**

(22) Date of filing: **16.09.87**

(54) **Curable cross-linked polyphenylene ether interpenetrating polymer network compositions and process.**

(30) Priority: **22.09.86 US 909870**

(43) Date of publication of application:
**30.03.88 Bulletin 88/13**

(45) Publication of the grant of the patent:
**13.11.91 Bulletin 91/46**

(84) Designated Contracting States:
**DE FR GB IT NL**

(56) References cited:
**GB-A- 1 291 609**
**US-A- 4 148 843**
**US-A- 4 189 417**

(73) Proprietor: **GENERAL ELECTRIC COMPANY**
**1 River Road**
**Schenectady New York 12305(US)**

(72) Inventor: **Peters, Edward Norman**
**51 West Street**
**Lenox, MA 01240(US)**
Inventor: **Bookbinder, Dana Craig**
**75 Pomeroy Avenue**
**Pittsfield, MA 01201(US)**
Inventor: **Fox, Daniel Wayne**
**193 Daws Avenue**
**Pittsfield, MA 01201(US)**
Inventor: **Smith, Gary Francis**
**140 Churchill Street**
**Pittsfield, MA 01201(US)**
Inventor: **Thomas, Douglas Patrick**
**2323 Tavener Drive**
**Louisville, KY 40222(US)**

(74) Representative: **Catherine, Alain et al**
**General Electric France Service de Propriété Industrielle 18 Rue Horace Vernet**
**F-92136 Issy-Les-Moulineaux Cedex(FR)**

**EP 0 261 574 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This application is related to EP-A-87 113 546.3.

The present invention relates to curable polymer compositions and to methods to make shaped articles using them. More particularly it relates to interpolymerizable compositions of a polyphenylene ether resin, free of groups which inhibit free radicals, and at least one polyvinyl unsaturated compound and at least one vinyl unsaturated monomer and an optional catalyst as well as optional reinforcing agents, flame retardant agents and/or impact modifying agents. Articles are produced by shaping the novel compositions below normal decomposition temperatures and allowing the monomeric vinyl component of the composition to cure into a polymer network.

In U.S.A 3,356,761, are disclosed compositions comprising hydroxy-terminated polyphenylene ethers, polyunsaturated components, such as divinyl benzene, poly(bis-phenol-A) fumarate and methylene dimethacrylate, liquid vinyl monomers, such as styrene and vinyl pyridine, alone, or in further combination with free radical-generating catalysts, such as peroxides. It is taught that a primary advantage is to form products containing polyphenylene ethers at low temperatures, e.g., well below 300°C., to avoid thermal degradation of the polyphenylene ethers at such high temperatures, as might otherwise be required. Although this patent teaches the production of linear polyphenylene ether containing crosslinked interpenetrating polymer networks by curing the polyunsaturated compounds, it does not suggest that additives which are normally thermally degradable at 300°C. can be included in such compositions. Moreover the compositions of this patent cure rather slowly and this is a major drawback.

In U.S.A 3,637,578, compositions are disclosed comprising hydroxy-terminated polyphenylene ethers, liquid vinyl monomers, and a reactive-type polyester resin in combination with a free radical catalyst. In general, interpolymers are produced by curing, but, again, recommended curing times are very slow, e.g., 20 minutes at 150°C., or the use of a highly reactive liquid vinyl monomer, such as diallyl phthalate, is required to cure in 5 minutes at a higher temperature, 160°C., and these are major drawbacks.

From U.S.A 3,375,228, it is known to modify polyphenylene ethers to improve their stability to oxidation, by reacting them with a so-called end-capping agent, which functionalizes the terminal hydroxyl groups of the polymers, rendering them less subject to interaction with oxygen. Suitable end-capping agents are, for example acid halides, anhydrides and ketenes. There is no suggestion in this patent, however, that such end-capped polyphenylene ether resins can be used to make rapidly curing interpenetrating polymer networks with polyunsaturated compounds, such as divinyl benzene, poly(bisphenol-A fumarate) and the like.

In U.S.A 3,317,633, there is disclosed the production of blends of polyolefins, such as polypropylene, and polyesters, such as poly(bisphenol-A fumarate) and the like. This reference teaches that the polyunsaturated polyesters in the blend can be reacted with a polar compound, such as a polyamine, and in so doing, the polyolefenic component is rendered more receptive to dyes. There is no hint or suggestion that the addition of the polar compound would provide polymer alloys, especially cross-linked interpenetrating polymer networks.

US -A- 4 148 843 is directed toward a process for the preparation of a composition which comprises :

(a) a capped polyphenylene oxide resin; and

(b) an alkenyl aromatic resin.

The process comprises a first step of forming a mixture of a capped polyphenylene oxide in an alkenyl aromatic monomer and a second step of heating said mixture for at least two hours to form the final composition. The alkenyl aromatic polymer in the final composition is said to have a higher molecular weight as compared with a composition prepared under similar conditions with an uncapped polyphenylene oxide.

In the present state of the art, therefore, it is known to use hydroxy terminated polyphenylene ethers with a polyunsaturated curable compound and, in addition, a plasticizing monomer, such as styrene, to achieve low processing temperatures. However, slow curing is a major drawback and, if curing rates can be accelerated, then such compositions can become widely useful. For example, numerous additives could then be employed which cannot take normal polyphenylene ether processing temperatures. Among these can be mentioned the excellent, low cost flame retardant, aluminum trihydrate and inexpensive forms of polyester fibers which can not now be used. In addition, block copolymers of styrene-butadiene-styrene and acrylate core-styrene shell polymers which are very efficient as impact modifiers can also be used.

It has now been discovered that a polyphenylene ether resin substantially free of groups which interfere with free radicals is necessary to provide rapid curing when combined with a polyvinyl unsaturated compound and interpolymerized with a liquid, plasticizing monomer. It is believed that the hydroxyl terminal groups and any ether groups normally present and easily convertible to hydroxyl groups, i.e., incipient

hydroxyl groups, must be removed or converted to inert functional groups prior to forming the interpenetrating polymer networks. Although numerous methods suggest themselves to so modify the polyphenylene ethers prior to use, especially convenient methods, as will be described, involve reacting them with capping agents, for example, an anhydride or an acid halide, prior to use. The compositions thereafter produced by blending the modified polyphenylene ethers with the liquid plasticizing monomers have been found to be uniquely suitable, in light of their vastly increased cure rates, for shaping and curing into articles having a wide variety of end uses.

According to the present invention there are provided curable compositions comprising

(i) a thermoplastic polyphenylene ether resin substantially free of substituents which are inhibitors of free radicals;

(ii)(a) at least one polyvinyl unsaturated compound, alone, or in further combination with

(ii)(b) at least one liquid, mono vinyl unsaturated compound having a general formula selected from

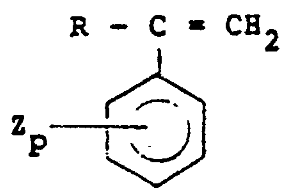

,

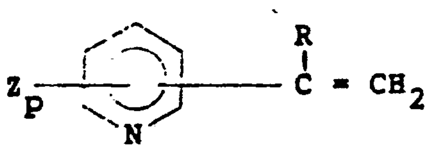

or a mixture of said compounds, wherein R is hydrogen or methyl, Z is hydrogen, halogen, alkyl or alkoxy and p is 0 or a whole number of from 1 to 3, alone, or in further combination with,

(ii)(c) at least one monovinyl unsaturated compound copolymerizable with and different from component (ii)(b), said vinyl unsaturated compounds (ii)(a), (ii)(b) and (ii)(c) comprising from 1 to 60 percent by weight of (i) and (ii)(a), (ii)(b) and (ii)(c) combined; and, optionally,

(iii) an effective amount of a catalyst capable of generating free radicals to initiate polymerization of the vinyl unsaturated compounds (ii)(a), (ii)(b) and (ii)(c).

Also contemplated by this invention are shaped articles of manufacture formed by melt processing a composition as defined above by

(1) blending powder or pellets of component (i), with liquid component (ii)(a), optionally, component (ii)(b) or (ii)(c) and, optionally, component (iii);

(2) extruding the composition to a desired shape at a temperature below 150 °C.; and

(3) curing component (ii)(a) and optional components (ii)(b) and (ii)(c).

Among the preferred features of the invention are curable compositions in which the polyphenylene ether is capped with a compound having the general formula (I)—Z—(II) which is a compound that contains in its molecule both group (I) which is at least one group having the formula

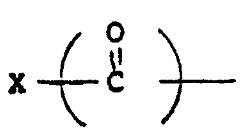

where X is F, Cl, Br, I, OH, OR, or

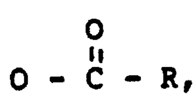

where R is H or an alkyl or aryl radical and group (II) which is at least one carboxylic acid, acid anhydride, acid amide, imido, carboxylic acid ester, amino or hydroxyl group; wherein groups (I) and (II) are covalently bonded through linkage Z which is a divalent hydrocarbon radical.

Preferably the compounds (ii)(a), (ii)(b) and (ii)(c) comprise from 15 to 40 percent by weight of (i) and (ii)(a), (ii)(b) and (ii)(c) combined.

DETAILED DESCRIPTION OF THE INVENTION

Before modification, the polyphenylene ethers (also known as polyphenylene oxides) used in the present invention are a well known class of polymers which have become very useful commercially as a result of the discovery by Allan S. Hay of an efficient and economical method of production (See, for example, U.S-A-3,306,874 and 3,306,875). After modification, they are still characterized as a class by the presence of arylenoxy structural units.

The polyphenylene ethers favored for modification and use in the practice of this invention generally contain structural units of the following formula

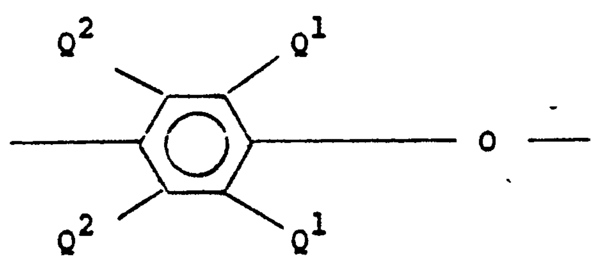

(I)

in which each of these units independently each $Q^1$ is hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers, are disclosed in the patent literature, including various Hay patents.

The polyphenylene ether generally has a molecular weight (number average, as determined by gel permeation chromatography, whenever used herein) within the range of 5,000 to 40,000. The intrinsic viscosity of the polymer is usually in the range of 0.4 to 0.6 deciliters per gram (dl./g.), as measured in solution in chloroform at 25° C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q_1$ is methyl and each $Q^2$ is hydrogen), the corresponding polymer of which may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound, such as a copper, manganese or cobalt compound, usually in combination with various other materials.

Among the preferred catalyst systems are those containing copper. Such catalysts are disclosed, for example, in the aforementioned U.S-A-3,306,874 and 3,306,875, and elsewhere. They are usually combinations of cuprous or cupric ions, halide ions (i.e., chloride, bromide or iodide), and at least one amine.

Also preferred are catalyst systems containing manganese. They are generally alkaline systems

containing divalent managanese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, alpha-hydroxyoximes (both monomeric and polymeric), o-hydroxyaryl oximes, and beta-diketones. Also useful are cobalt-containing catalyst systems. Those skilled in the art will be familiar with patents disclosing manganese and cobalt-containing catalyst systems for polyphenylene ether preparation.

Especially useful polyphenylene ethers for modification according to this invention are those which comprise molecules having at least one of the end groups of formulas II and III, below, in which $Q^1$ and $Q^2$ are as previously defined, each $R^1$ is independently hydrogen or alkyl, providing that the total number of carbon atoms in both $R^1$ radicals is 6 or less, and each $R^2$ is independently hydrogen or a $C_{1-6}$ primary alkyl radical, Preferably, each $R^1$ is hydrogen and each $R^2$ is alkyl, especially methyl or n-butyl.

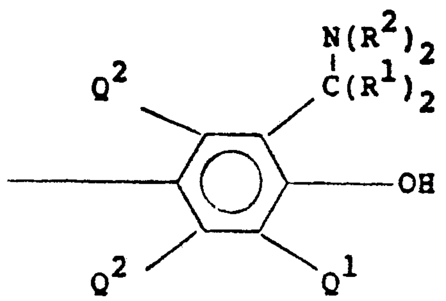

(II)

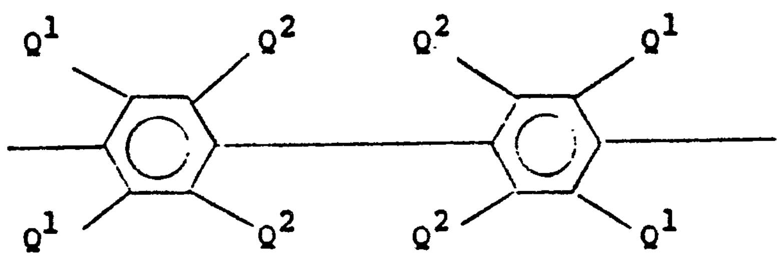

(III)

Polymers containing the aminoalkyl-substituted end groups of formula II may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the alpha-hydrogen atoms on one or more $Q^1$ radicals adjacent to the hydroxy group on the terminal unit of the polymer chain. During further processing and/or blending, the aminoalkyl-substituted end groups may undergo various reactions, probably involving a quinone methide-type intermediate of formula IV, below ($R^1$ is defined as above), with beneficial effects often including an increase in impact strength and compatibilization with other blend components.

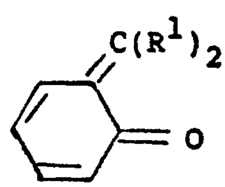

(IV)

Polymers with biphenol end groups of formula III are typically obtained from reaction mixtures in which a by-product diphenoquinone of formula V, below, is present, especially in a copper-halide-secondary or tertiary amine system. In this regard, the disclosures of the U.S-A-4,234,706, 4,477,649 and 4,482,697 are particularly pertinent. In mixtures of this type, the diphenoquinone is ultimately incorporated into the polymer in substantial amounts, chiefly as an end group.

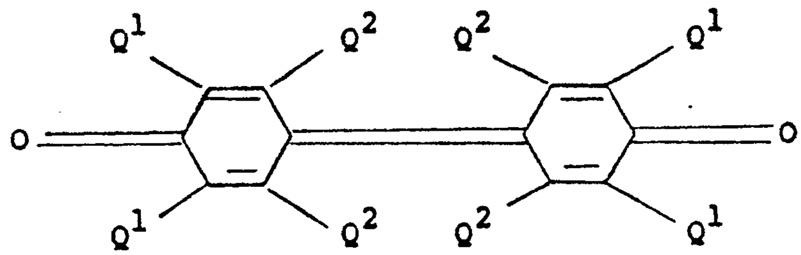

(V)

In many polyphenylene ethers obtained under the conditions described above, a substantial proportion of the polymer molecules, usually as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups.

To modify the foregoing polyphenylene ethers, they are preferably provided with terminal groups selected from the reaction products thereof with an organic acid, an organic acid halide, an organic acid anhydride, a ketene, or a compound having one or more of such functional groups or a mixture of any of the foregoing.

Many ways are known to those skilled in this art for forming such modified polyphenylene ethers. For example, the above-mentioned Holoch and van Sorge patent describes heat treatment of the polymer to generate incipient, reactive hydroxyl groups on the polymer chain followed by reaction of generated hydroxyl groups with a material capable of reacting therewith to form the inert substituents. According to the patent, the polyphenylene ethers can be modified using either a one-step or a two-step capping procedure. In the one step process, a solution is prepared by dissolving both the polymer and a capping agent in a mutual solvent such as toluene, benzene, or any other liquid non-reactive with the polymer and capping agent. The solution is heated to an elevated temperature, preferably to temperatures in excess of (250 °F) 121 °C and most preferably, to temperatures varying between 204 and 343 °C (400 and 650 °F). Heating may be performed in an autoclave using pressures exceeding atmospheric. The temperature is held for a period of time sufficient to allow any incipient hydroxyl groups to be generated. This is, of course, dependent upon the temperature used and the reactivity of the materials. In general times varying between 30 seconds and 2 hours have been found suitable. Hydroxyl groups are generated at the elevated temperature and simultaneously react with capping agent to form substituents substantially inert to free radicals. Upon completion of the capping reaction, the solution is cooled and the polymer recovered by precipitation with a polymer non-solvent such as methanol.

Alternatively, the one-step capping reaction can be carried out dry by blending polymer in powder form with a capping agent and extruding the blend at the elevated temperatures.

The two-step capping procedure is similar to the one-step process and involves a first step of preheating the polymer, either in powder or solution form to generate hydroxyl groups in accordance with the procedure outlined above. The polymer may then be cooled and reacted with the capping agent, at ambient or elevated temperatures to stabilize the polymer. At lower temperatures, it is desirable to use a catalyst such as boron trifluoride etherate, sodium acetate or a tertiary amine.

The specific capping agents used are not critical providing they are reactive with hydroxyl groups to form a substituent inert to free radicals. Typical examples of capping agents include acid halides, anhydrides, ketenes, etc. Typical examples of acid halides include, but are not limited to, acetyl chloride, acetyl bromide, benzoyl chloride, cinnamoyl chloride, succinoyl chloride, succinoyl fluoride, adipoyl chloride, stearoyl fluoride, lauroyl chloride, malonoyl chloride, terephthaloyl chloride, isophthaloyl chloride, etc. Typical examples of anhydrides, include for example, maleic anhydride, butyric anhydride, trichloroacetic anhydride, propionic anhydride, pivalic anhydride, phthalic anhydride, succinic anhydride, m-dichlorobenzoic anhydride, 2,3,4,5,6-pentachlorobenzoic anhydride, pentaoic anhydride, palmatoic anhydride, stearic anhydride, etc. Typical ketenes include, for example, diphenyl ketene, unsubstituted ketene, butyl ethylketene, dimethyl ketene, etc.

Special mention is made of an especially preferred family of capping agents. These are of the formula: (I)—Z—(II), wherein I and (II) are as defined above.

Illustratively, the group (I) portion of the capping agent has been generalized as an acyl-functional group depicted by the following formula:

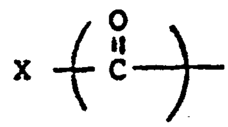

where X is F, Cl, Br, I, OH, OR or

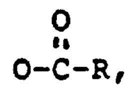

etc. and where R is H or an aliphatic or aromatic radical having up to about 10 carbon atoms. Group (I) is covalently bonded to a Group II, e.g., an anhydride group.

Examples of suitable materials of general formula (I)—Z—(II) include but are not limited to the following: Chloroethanoylsuccinic anhydride

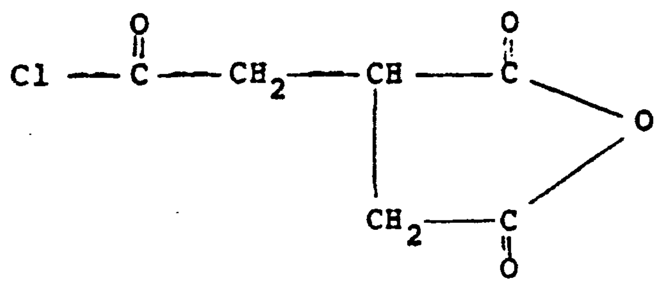

trimellitic anhydride acid chloride (TAAC)

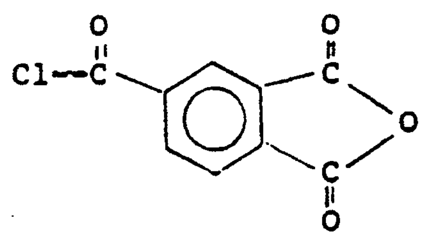

chloroformylsuccinic anhydride

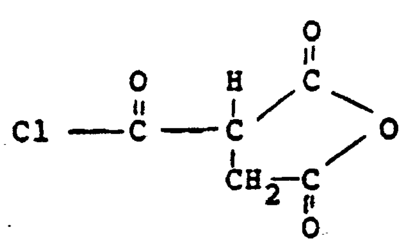

1-acetoxyacetyl-3,4-dibenzoic acid anhydride

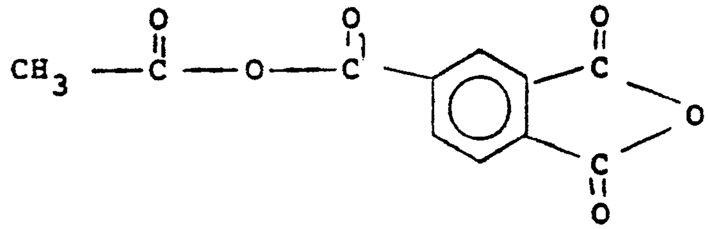

Special mention is made of the most preferred such compound, trimellitic anhydride acid chloride. Its use as a capping agent and the use of the polyphenylene ethers reacted therewith in the compositions of this invention are exemplified hereinafter.

With respect to component (II)(a), the polyvinyl unsaturated compound can vary widely in type and amount. By way of illustration, it can comprise a polyunsaturated polyester, a polyvinyl aromatic hydrocarbon or a poly(acrylyl or methacrylyl) compound, and the like.

The unsaturated polyesters (UPE) with are suitable for use in the present invention are typically synthesized by reacting a diol with an unsaturated dibasic acid. Alternatively, the anhydride ester or acid chloride form of the unsaturated dibasic acid may be used.

Some typical unsaturated polyesters which may be used in accordance with the present invention are as follows:

(1) 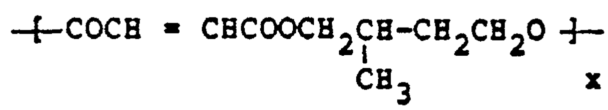

(2) $-\!\!\left[COCH=CHCOO(CH_2)_{10}-O\right]_x\!\!-$

(3) 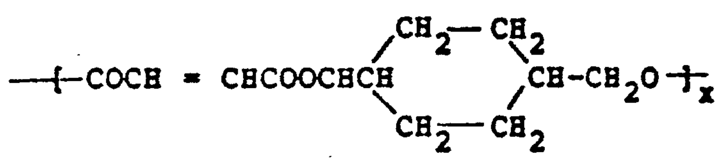

(4) 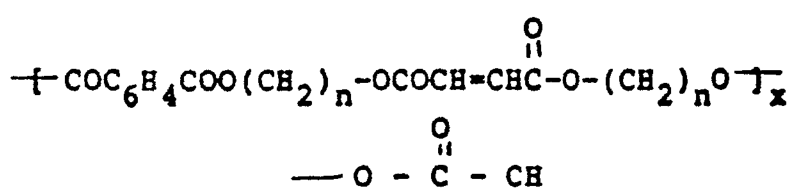

(5) 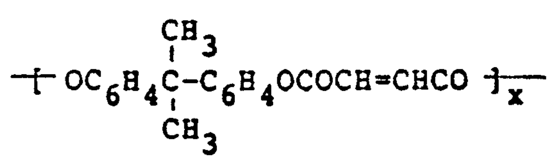

(6) 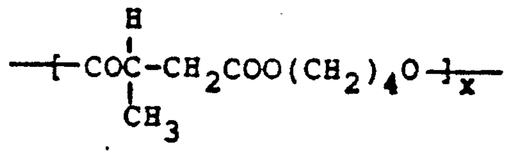

(7) 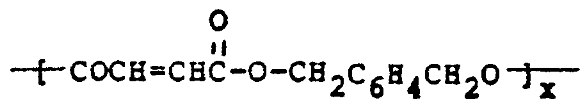 .

In the above table, n is a number from 2 to 10, and x represents the number of repeating units present in the UPE.

Commercially available unsaturated polyesters such as "Reichhold® SMA-48", "Reichhold 80001 Alkyd®" and "Derakane® 790" may also be used.

Special mention is made of the polyester of formula (5). This is commercially available from ICI under the tradename "Atlac® 382-05".

With respect to component (ii)(b), the liquid monovinyl unsaturated compound is meant to include a compound or a mixture of compounds liquid at room temperature or at elevated temperatures of up to 100° C. and selected from:

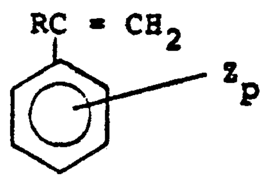

or

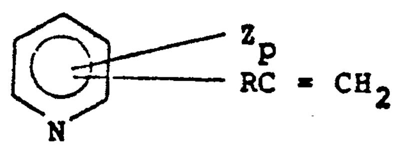

or a mixture of the foregoing, where R is hydrogen or methyl; Z is hydrogen, halogen (e.g., chlorine, bromine, iodine and fluorine), alkyl (e.g., methyl, ethyl, propyl, isopropyl, butyl, octyl, etc.) or alkoxy (e.g., methoxy, ethoxy, propoxy, isopropoxy, butoxy, etc); and p is 0 or a whole number equal to from 1 to 3.

The preferred vinyl unsaturated material is styrene.

With respect to component (ii)(c), this is optional and will comprise at least one monovinyl unsaturated compound compolymerizable with and different from (ii)(b). Illustratively, the compounds can be unsaturated esters, e.g., dialkyl fumarates, e.g., diethyl fumarate and dioctyl fumarate, dialkyl itaconates, dialkyl maleates, N-substituted maleimides, e.g., N-phenyl maleimide, acrylates, such as butyl acrylate, vinyl ethers, vinyl esters, such as vinyl acetate, and the like. Preferably, the component (ii)(c) will be diethyl fumarate or N-phenyl maleimide.

In those embodiments of the invention which are reinforced, any conventional reinforcing agent can be used, in conventional amounts, so long as it does not inhibit the interpolymerization reaction. Illustratively, these will comprise reinforcing glass fibers, carbon fibers, polyester fibers, titanium whiskers, generally in amounts of from 5 parts to 50 parts by weight, per 100 parts by weight of the total composition. Preferably in component (iv)(a) the reinforcing fibers comprise glass fibers, polyester fibers or a mixture thereof.

In those embodiments of the invention which are flame retarded, component (iv)(b) can vary widely in type and amount. For example a halogenated aromatic compound or low polymer can be used, e.g., decabromodiphenyl ether, or brominated polycarbonate oligomer can be used, as well as phosphate esters, and the like, in amounts of from 1 to 40 parts by weight per 100 parts by weight of the total composition. Special mention is made of non-halogen, non-phosphorus, polyphenylene ethercontaining compositions of

this invention rendered flame retardant with aluminum trihydrate, because of its excellent properties, giving only water as an off gas, and not contributing to smoke formation.

In those embodiments of the invention which are impact modified, component (iv)(c) these can vary widely in type and amount, although some are better than others. For example, rubber, synthetic or natural, can be included However, it is preferred to use polymeric impact modifiers well known to those skilled in this art such as block copolymers and core shell polymers. Preferred block copolymers are styrene-ethylene-butylene-styrene compositions and preferred core shell polymers have a polymerized butyl acrylate core and a polystyrene shell.

The method of forming the blend of the vinyl material and other components and the modified polyphenylene ether is not critical, any of the methods well known in the prior art being suitable. For example, the components may be mixed in a blender such as a Waring Blender, a Haake mixing bowl, or in conventional rubber milling equipment. Alternatively, the vinyl material and other components and polymer may be dissolved in a common solvent and recovered therefrom by solvent evaporation or by precipitation with a non-solvent.

The quantity of vinyl material and other components combined with the polyphenylene ether may vary within broad limits, but should not be used in an amount that would cause complete dissolution of the polymer. Preferably, the mixture of vinyl material and polymer is in the form of free flowing powder or pellets. When an excessive amount of vinyl material is used, a paste or viscous liquid forms. In general, the quantity of vinyl material may vary between 1.0 and 60.0%, by weight, of the total composition, but it should be understood that this is dependent upon the specific materials used and the molecular weight of the polymer. From 15.0 to 40.0% by weight, of vinyl material in the total composition, constitutes a preferred embodiment of this invention.

Following combination of the vinyl material with the polyphenylene ether, the composition may be formed into shaped articles by melt processing using conventional procedures. For example, film and fiber of substantial cross section can be formed by extrusion. The temperature of processing is dependent upon the quantity of vinyl material in the composition and the molecular weight of the polymer. For example, with a mixture consisting of styrene and a linear poly-(2,6-dimethyl-1,4-phenylene) ether having an intrinsic viscosity of about 0.5 dl./g., the extrusion temperature through the orifice is about 80° C. The same polymer free of styrene has an extrusion temperature in excess of 275° C.

If the composition used to form the shaped article is in the form of free flowing powder or pellets, the so formed shaped article will maintain its structural integrity and can be handled and processed without damage. Curing or polymerization of the vinyl starting material may be initiated by almost any source of free radicals including organic peroxide materials and organic azo compounds, such as benzoyl peroxide, dicumyl peroxide, azobisisobutyronitrile, etc., any of which can be included in the initial formulation. A wide variety of organic peroxides may be used including organic diperoxides. Special mention is made of t-butyl peroxybenzoate.

Other means of initiating and carrying out the polymerization include the use of ionizing radiation such as X-radiation, electron beam irradiation, promoted UV radiation, and similar application of ionizing energy.

A further alternative is to use heat alone without added catalyst. This approach requires extended cure time, but has the advantage of not requiring catalysts and provides for very extensive shelf life of the pre-mix.

Articles formed by the above procedures possess excellent physical properties as will be described in the following examples which are set forth for purpose of illustration, but should not be construed as limiting the invention thereto.

The following procedures can be employed to prepare capped polyphenylene ethers for use in the present invention.

PROCEDURE A

A benzoate capped poly(2,6-dimethyl-1,4-phenylene ether) is made by dissolving 25 g of poly(2,6-dimethyl-1,4-phenylene ether) in 400 ml of toluene, adding approximately 3 g. of benzoyl chloride and approximately 2 g. of triethylamine and stirring for 2 hours. The temperature is increased to 80° C. After 2 hours the mixture is cooled. The capped polymer is isolated by precipitation in methanol and dried under vacuum at 50-75° C.

PROCEDURE B

An acetate capped poly(2,6-dimethyl-1,4-phenylene ether) is made by repeating Procedure A, but

substituting acetic anhydride for benzoyl chloride and increasing the triethylamine to 3 grams.

PROCEDURE C

A maleate capped poly(2,6-dimethyl-1,4-phenylene ether) is prepared by repeating Procedure B, but substituting maleic anhydride for benzoyl chloride and the temperature is increased to 100° C. for one hour.

PROCEDURE D

A trimellitic anhydride acid chloride (TAAC) capped polyphenylene ether is prepared by two methods. In one method, a 30% by weight solution of poly(2,6-dimethyl-1,4-phenylene) ether in toluene (obtained directly from the polymerization of 2,6-xylenol in toluene after removal of copper catalyst) is utilized ("PRE CON" PPE). In another method, an "isolated PPE" obtained by methanol precipitation and dissolved in 500 parts toluene is used. In either case, one hundred parts of PPE is reacted with between 1.7 and 2.3 parts of trimellitic anhydride acid chloride (TAAC), and between 4.1 and 5.8 parts of dimethyl-n-butylamine (DMBA) is utilized as an acid acceptor. The reactions are carried out at 95° C. for between 0.5 to 3.0 hours.

The TAAC is obtained from Aldrich Chemical at a purity of 99%, molecular weight 210.57 g/mole, and melting point of 66 to 68° C.

The reaction products are purified by precipitation in methanol and thereafter dried overnight in a vacuum oven at 60 to 80° C.

The following examples illustrate the present invention.

EXAMPLES 1-3

Compositions comprising poly(2,6-dimethyl-1,4-phenylene ether) Benzoate, poly(2,6-dimethyl-1,4-phenylene ether) Acetate and poly(2,6-dimethyl-1,4-phenylene ether) Maleate, 50 parts by weight, and 50 parts by weight bisphenol-A fumarate resin, a polyunsaturated polyester of the formula

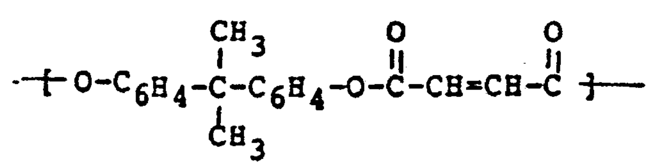

were prepared. The polyester is sold commercially by ICI, Inc. under the tradename "Atlac® 382-05" and has an acid number of 27. Compositions and curing times were determined by differential scanning colorimetry (DSC) and are set forth in Table 1:

TABLE 1: Interpolymers of Polyphenylene Ether and Poly(Bisphenol-A Fumarate)

| Example | 1A* | 1 | 2 | 3 |
|---|---|---|---|---|
| Composition (parts by weight) | | | | |
| Poly(2,6-dimethyl-1,4-phenylene ether) uncapped | 50 | -- | -- | -- |
| Poly(2,6-dimethyl-1,4-phenylene ether) Benzoate capped | -- | 50 | -- | -- |
| Poly(2,6-dimethyl-1,4-phenylene ether) Acetate capped | -- | -- | 50 | -- |
| Poly(2,6-dimethyl-1,4-phenylene ether) Maleate capped | -- | -- | -- | 50 |
| Bisphenol-A Fumarate | 50 → | | | |
| t-butyl peroxybenzoate | 1.5 → | | | |
| Properties | | | | |
| Cure time determined by DSC at 150°C, minutes | 6 | 2 | 2 | 2 |

* Control

The data show that the capped interpolymers according to this invention are very much faster in curing times than the control. This translates into shorter cycle times during molding.

EXAMPLE 4

A composition according to this invention is prepared by mixing poly(2,6-dimethyl-1,4-phenylene ether) TAAC (Procedure D), 50 parts by weight, bisphenol-A fumarate, 50 parts by weight, and t-butyl peroxybenzoate, 1.5 parts by weight and compression molding at 150° C (302° F), for 3 minutes. The resulting shaped article has a heat distortion temperature of 154° C (310° F) and a notched Izod impact strength of (0.2 ft-lbs/in) 0.106 J/cm.

EXAMPLES 5-6

Reinforced compositions according to this invention are prepared by dry mixing poly(2,6-dimethyl-1,4-phenylene ether) TAAC and bisphenol-A fumarate with glass fibers and compression molding and testing for heat distortion temperature and impact strength. The compositions employed and the results obtained are set forth in Table 2:

TABLE 2: Reinforced Interpolymers of Polyphenylene Ether-TAAC and Poly(Bisphenol-A Fumarate)

| Example | 5 | 6 |
|---|---|---|
| Composition (parts by weight) | | |
| Poly(2,6-dimethyl-1,4-phenylene ether) TAAC | 40 | 40 |
| Poly(Bisphenol-A Fumarate)[a] | 40 | 40 |
| Catalyst, t-butyl peroxybenzoate | 0.6 | 0.6 |
| Glass Fibers (1/8 inch)[b] (3.175mm) | 20 | -- |
| Glass Fibers (1/4 inch)[b] (6.35mm) | -- | 40 |
| Properties | | |
| Heat Distortion Temp., @1.82MPa (264 psi), (°F) °C | (308) 153 | (308) 153 |
| Notched izod Impact Strength, (ft-lbs/in.) J/cm | (3.0) 1.6 | (5.8) 3.09 |

a ICI, ATLAC® 382-05.

b Owens-Corning Fiberglass Co., 405AA.

The data demonstrate that the addition of glass fibers leads to toughter and stiffer shaped articles.

EXAMPLES 7-9

Reinforced compositions containing polyester fibers are prepared in accordance with this invention by blending polyethylene terphthalate fibers into a mixture of poly(2,6-dimethyl-1,4-phenylene ether) TAAC and bisphenol-A fumarate (procedure of Example 4). The compositions and results are set forth in Table 3.

TABLE 3:

TABLE 3: Reinforced Interpolymers of Polyphenylene Ether, and Poly(Bisphenol-A Fumarate)

| Example | 7 | 8 | 9 |
|---|---|---|---|
| **Composition (parts by weight)** | | | |
| Poly(2,6-dimethyl-1,4-phenylene ether)TAAC | 40 | 35 | 45 |
| Poly(Bisphenol-A Fumarate)[a] | 40 | 35 | 45 |
| Catalyst t-butyl peroxybenzoate | 0.6 | 0.53 | 0.68 |
| Polyethylene Terephthalate fiber (1/8 in.)[b] (3.175mm) | 20 | -- | -- |
| Polyethylene Terephthalate fiber (1/4 in.)[b] (6.35mm) | -- | 30 | 10 |
| **Properties** | | | |
| Heat Distortion Temp., at 1.82MPa (264 psi), (°F) °C | (309) 154 | (311) 155 | (315) 157 |
| Notched Izod Impact Strength, (ft-lbs/in.) J/cm | (4.1) 2.18 | (14.7) 7.84 | (4.5) 2.4 |

a ICI, Atlac® 382-05.

b Mini Fibers Co., No. G-6010.

The reinforced interpolymers show increased impact strength.

EXAMPLES 10-14

Reinforced compositions using mixed fibers are prepared in accordance with this invention by blending a mixture of poly(2,6-dimethyl-1,4-phenylene ether) TAAC and poly(bisphenol-A fumarate) (procedure of Example 4) with both glass and poly(ethylene terephthalate) fibers. The composition and results are set forth in Table 4.

TABLE 4: Reinforced Interpolymers of Polyphenylene Ether-TAAC and Poly(Bisphenol-A Fumarate)

| Example | 10 | 11 | 12 | 13 | 14 |
|---|---|---|---|---|---|
| **Composition (parts by weight)** | | | | | |
| Poly(2,6-dimethyl-1,4-phenylene ether) TAAC | 32 | 45 | 45 | 45 | 40 |
| Poly(Bisphenol-A Fumarate) | 45 | 45 | 45 | 45 | 40 |
| Catalyst, t-butyl peroxybenzoate | 0.68 | 0.68 | 0.68 | 0.68 | 0.68 |
| Glass Fibers (1/8 inch) (3.175mm) | 10 | 20 | 10 | -- | 10 |
| Glass Fibers (1/4 inch) (6.35mm) | -- | -- | -- | 20 | 10 |
| Poly(ethylene terephthalate) Fibers (1/8 in.) (3.175mm) | 10 | -- | -- | -- | -- |
| Poly(ethylene terephthalate) Fibers (1/2 in.) (6.35mm) | -- | 10 | 20 | 10 | 10 |
| **Properties** | | | | | |
| Heat Distortion Temp., at 1.82MPa (264 psi), (°F) °C | 151 (304) | 169 (335) | 170 (338) | 170 (338) | 153 (308) |
| Notched Izod Impact Strength, (ft-lbs/in.) J/cm | (7.6) 4.05 | (2.4) 1.28 | (2.6) 1.38 | (3.0) 1.6 | (5.8) 3.09 |

EXAMPLES 15-19

Flame retardant and reinforced flame retardant articles are prepared by compression molding various processed compositions of poly(2,6-dimethyl-1,4-phenylene ether) TAAC and poly(bisphenol-A fumarate) in combination with aluminum trihydrate alone or with aluminum trihydrate and glass or poly(ethylene terephthalate) fibers. Compositions and results are set forth in Table 5:

TABLE 5: Flame Retardant and Reinforced Flame Retardant Interpolymers of Polyphenylene Ether and Poly(Bisphenol-A Fumarate)

| Example | 15[a] | 16[b] | 17[b] | 18[c] | 19[c] |
|---|---|---|---|---|---|
| **Composition (parts by weight)** | | | | | |
| Poly(2,6-dimethyl-1,4-phenylene ether) TAAC | 50 | 30 | 30 | 30 | 24 |
| Poly(Bisphenol-A Fumarate) | 25 | 25 | 30 | 30 | 24 |
| Catalyst, t-butyl peroxybenzoate | 0.375 | 0.375 | 0.4 | 0.4 | 0.35 |
| Zinc Stearate | -- | -- | -- | -- | 3 |
| Aluminum Trihydrate | 25 | 35 | 35 | 30 | 40 |
| Glass Fibers (1/4 inch) (6.35 mm) | -- | -- | -- | 10 | 8 |
| Poly(ethylene terephthalate) Fibers (1/2 in.) (1.27 cm) | -- | 10 | 5 | -- | -- |
| **Properties** | | | | | |
| Heat Distortion Temp., at 1.82 MPa (264 psi), (°F) °C | 154 (310) | 155 (312) | 155 (311) | 162 (324) | 160 (320) |
| Notched Izod Impact Strength, (ft-lbs/in.) J/cm | N/D | 2.56 (4.8) | 1.38 (2.6) | 1.81 (3.4) | 1.49 (2.8) |
| Underwriters Laboratories Vertical Burn Test, UL-94 | V-0 | V-0 | V-0 | V-0 | 5-V at 3.175 mm (1/8 in.) V-0 at 1.5875 mm (1/16 in.) |

a extruding to initial mix, 80°C.
b dry blending in Henschel mixer.
c melt mixing in Haake bowl, 75-80°C.

When tested for flammability in the Underwriters Laboratories Vertical Burn Test, UL-94, the shaped articles self-extinguished in less than ten seconds and did not drip flaming resin (rating V-0).

EXAMPLES 20-21

In these examples the compositions are injection molded instead of compression molded. Samples are dry mixed on a Henschel mixer and then injection molded into ASTM test pieces on a 12.4 Tons (275 Ton) Thermoset Epco Machine. Mold surface temperatures are 150-153° C (302-305° F). with barrel temperatures ranging from 66-82° C (150 to 180° F). The compositions and properties obtained are set forth in Table 6:

TABLE 6: Injection Molded Reinforced Interpolymers of Polyphenylene Ether and Poly(Bisphenol-A Fumarate)

| Example | 20 | 21 |
|---|---|---|
| **Composition (parts by weight)** | | |
| Poly(2,6-dimethyl-1,4-phenylene ether) TAAC | 33.5 | 33.5 |
| Poly(Bisphenol-A Fumarate) | 33.5 | 33.5 |
| Glass Fibers (1/2 inch) (1.27cm) | 30.0 | 20.0 |
| Poly(ethylene terephthalate) Fibers (1/2 in.) (1.27cm) | -- | 10.0 |
| Catalyst, t-butyl peroxybenzoate | 0.5 | 0.5 |
| Zinc Stearate | 3.0 | 3.0 |
| **Properties** | | |
| Dynatup | | |
| Energy absorbed, (ft.-lbs.) J | 19.79 (14.6) | (18.1) 24.54 |
| Peak load, (lbs.) kg | 226.8 (500) | (474) 215 |
| Notched izod Impact Strength, (ft-lbs/in.) J/cm | (1.9) 1.0 | (2.4) 1.28 |
| Heat Distortion Temp. at 1.82MPa (@264 psi), (°F.) °C | (320) | (310) |
| Tensile | | |
| Break strain, % | 1.6 | 1.6 |
| Break stress, (Kpsi) MPa | 47.57 (6.9) | (5.6) 38.61 |
| Flexural Modulus, (Kpsi) MPa | 8273.6 (1,200) | (970) 6687.8 |
| Flexural Strength, (Kpsi) MPa | 164.09 (23.8) | (16.5) 113.76 |

Molded articles having engineering plastic property profiles are obtained.

EXAMPLE 22

A composition is formed by the method described in Example 4 but with the difference that it contains the following ingredients in parts by weight:

| | Parts |
|---|---|
| Poly(2,6-dimethyl-1,4-phenylene ether) TAAC | 50 |
| Divinyl benzene | 10 |
| Styrene | 40 |
| t-Butyl peroxybenzoate | 1.5 |
| | 101.5 |

A shaped article according to this invention is produced by heating the composition in a mold at (302° F) 150° C for 3 minutes.

EXAMPLE 23

A composition is formed by the method described in Example 4 but with the difference that it contains the following ingredients in parts by weight:

| | Parts |
|---|---|
| Poly(2,6-dimethyl-1,4-phenylene ether) TAAC | 50 |
| Poly(bisphenol-A fumarate)[a] | 10 |
| Styrene | 40 |
| t-Butyl peroxybenzoate | 1.5 |
| | 101.5 |

a Atlac® 382-05

A shaped article is produced according to this invention by heating the composition in a mold at (302° F) 150° C for 3 minutes.

EXAMPLE 24

A composition is formed by the method described in Example 4 but with the difference that it contains the following ingredients in parts by weight:

| | Parts |
|---|---|
| Poly(2,6-dimethyl-1,4-phenylene ether) TAAC | 66.7 |
| Styrene | 30.0 |
| Divinyl benzene | 3.3 |
| t-butyl peroxybenzoate | 0.75 |
| | 100.75 |

A shaped article is produced according to this invention by heating and thermally polymerizing the composition in a mold at (302° F) 150° C for 3 minutes.

EXAMPLE 25

A composition is formed by the method described in Example 4 but with the difference that it contains the following ingredients in parts by weight:

| | Parts |
|---|---|
| Poly(2,6-dimethyl-1,4-phenylene ether) TAAC | 80 |
| Styrene | 16 |
| Dimethylene methacrylate | 4 |
| t-butyl benzoate | 0.75 |
| | 100.75 |

A shaped article is produced according to this invention by heating the composition in a mold at (302° F.) 150° C for 3 minutes.

EXAMPLES 26-28

Compositions useful for Bulk Molding Compound or Sheet Molding Compound "BMC/SMC" are made and when they include polyphenylene ether resin modified with TAAC, their surface abrasion resistance, as measured by ASTM D-1044, is found to be increased. The compositions are cured at (302° F) 150° C for 3 minutes, and then tested. The formulations used and the results obtained are set forth in Table 7:

**TABLE 7: BMC/SMC Comprising Polyphenylene Ether and Poly (Bisphenol-A) Fumarate**

| Example | 26A* | 26 | 27 | 28 |
|---|---|---|---|---|
| **Composition (parts by weight)** | | | | |
| Poly(2,6-dimethyl-1,4-phenylene ether) TAAC | -- | 12.2 | 24.8 | 37.0 |
| Poly(Bisphenol-A Fumarate)[a] | 35 | 35 | 35 | 35 |
| Glass Fibers, (1/8 inch[b]) 3.175 mm | 25 | 25 | 25 | 25 |
| Calcium Carbonate[c] | 37 | 24.8 | 12.2 | -- |
| Catalyst, t-butyl peroxybenzoate | 0.5 | 0.5 | 0.5 | 0.5 |
| Zinc Stearate | 3.0 | 3.0 | 3.0 | 3.0 |
| **Properties** | | | | |
| Flexural Modulus, (Kpsi) MPa | 7584.1 (1100) | 5998.4 (870) | 12065.6 (1750) | 4343.4 (630) |
| Flexural Strength, (Kpsi) MPa | (12.7) 85.5 | (11.3) 77.9 | (11.0) 75.8 | (14.0) 96.5 |
| Taber Abrasion, ASTM D-1044 mg/1000 cycles | 135 | 72 | 39 | 30 |

* Control

a ATLAC® 382-05

b Owens-Corning Fiberglas Co., 405AA

c Thompson & Weinman Co., Snowflake® PE

The abrasion resistance of the compositions of this invention (26-28) is markedly improved in comparison with the control (26A*).

The above-mentioned patents, publications and test methods are incorporated herein by reference.

Many variations will suggest themselves to those skilled in this art in light of the above, detailed description. For example, instead of using polyphenylene ether capped with TAAC, polyphenylene ether capped with acetic anhydride, maleic anhydride and benzoyl chloride can be used. Instead of a polyunsaturated polyester, polyvinyl aromatic hydrocarbon or a poly(acrylyl or methacrylyl) can be used. Instead of styrene monomer, alphamethyl styrene, vinyl toluene, and 4-vinyl pyridine can be used. Instead of t-butyl peroxybenzoate, azobisisobutyronitrile can be used. Instead of aluminum trihydrate, decabromodiphenyl ether can be used. Instead of glass fibers and polyester fibers, fibers comprising polypropylene, cellulosics (rayon, cotton, jute, etc.), nylon, acrylics, wool, and the like can be used. Other additives, such as chlorinated polymers, antioxidants, thermal and ultraviolet stabilizers, lubricants, organic dyes and pigments, anti-static agents and the like can be employed. In general, any additives conventional for use in commodity plastics, e.g., polyethylene, polypropylene, polystyrene and vinyls can now be used in an engineering system.

## Claims

1. A curable composition comprising:
   (i) a thermoplastic polyphenylene ether resin substantially free of substituents which are inhibitors of free radicals;
   (ii)(a) at least one polyvinyl unsaturated compound, alone, or in further combination with
   (ii)(b) at least one liquid, monovinyl unsaturated compound having a general formula selected from

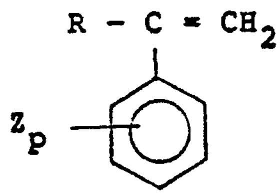

,

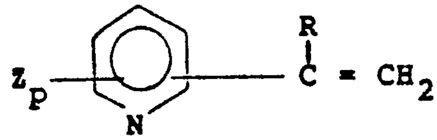

or a mixture of said compounds, wherein R is hydrogen or methyl, Z is hydrogen, halogen, alkyl or alkoxy and p is 0 or a whole number of from 1 to 3, alone, or in further combination with,
(ii)(c) at least one liquid monovinyl unsaturated compound copolymerizable with and different from component (ii)(b), said vinyl unsaturated compounds (ii)(a), (ii)(b) and (ii)(c) comprising from 1 to 60 percent by weight of (i) and (ii)(a), (ii)(b) and (ii)(c) combined; and, optionally,
(iii) an effective amount of a catalyst capable of generating free radicals to initiate polymerization of the vinyl unsaturated compounds (ii)(a), (ii)(b) and (ii)(c).

**2.** A curable composition as defined in Claim 1 which also includes:
(iv)(a) an effective amount of a reinforcing agent;
(iv)(b) an effective amount of a flame retardant agent; or
(iv)(c) an effective amount of an impact modifier, or a combination of any of the foregoing.

**3.** A composition as defined in Claim 1 wherein the compounds (ii)(a), (ii)(b) and (ii)(c) comprise from 15 to 40 percent by weight of (i) and (ii)(a), (ii)(b) and (ii)(c) combined.

**4.** A composition as defined in Claim 1 wherein said polyphenylene ether is a homopolymer or copolymer containing structural units of the formula:

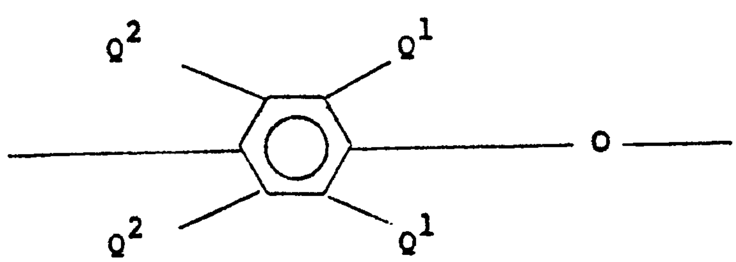

in which for each of these units independently each $Q^1$ is hydrogen, halogen, primary or secondary lower alkyl having up to seven carbon atoms, phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$, said polyphenylene ether having terminal groups selected from reaction products of said polyphenylene ether with an organic acid, an organic acid halide, an organic acid anhydride, a ketene, or a compound having more than one of the functional groups or a mixture of any of the foregoing.

**5.** A composition as defined in Claim 1 wherein said polyphenylene ether is capped with a compound having the general formula (I)—Z—(II) which is a compound that contains in its molecule both group (I) which is at least one group having the formula

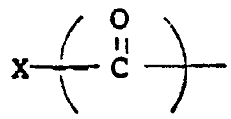

where X is F, Cl, Br, I, OH, OR, or

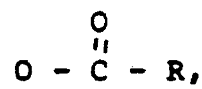

where R is H or an alkyl or aryl radical and group (II) which is at least one carboxylic acid, acid anhydride, acid amide, imido, carboxylic acid ester, amino or hydroxyl group; wherein groups (I) and (II) are covalently bonded through linkage Z which is a divalent hydrocarbon radical.

**6.** A composition as defined in Claim 3 wherein said polyphenylene ether is a poly(2,6-dimethyl-1,4-phenylene ether) or a poly(2,6-dimethyl-co-2,3,6-trimethyl-1,4-phenylene ether) end capped with an acid halide, and acid anhydride or compound having both acid halide and acid anhydride functional groups.

**7.** A composition as defined in Claim 4 wherein said polyphenylene ether is end capped with benzoyl chloride, acetic anhydride, maleic anhydride or trimellitic anhydride acid chloride.

**8.** A composition as defined in Claim 1 wherein component (ii)(a) comprises a polyunsaturated polyester, a polyvinyl aromatic hydrocarbon or a poly(acrylyl or methacrylyl) compound.

**9.** A composition as defined in Claim 8 wherein component (ii)(a) comprises a poly(bisphenol-A fumarate), divinyl benzene, or dimethylene methacrylate.

**10.** A composition as defined in Claim 1 wherein component (ii)(b) comprises a vinyl aromatic hydrocarbon and component (ii)(c) comprises a dialkyl fumarate or an N-substituted maleimide.

**11.** A composition as defined in Claim 10 wherein component (ii)(b) comprises styrene and component (ii)-(c) comprises diethyl fumarate or N-phenyl maleimide.

**12.** A composition as defined in Claim 1 wherein component (iii) comprises an organic peroxide or an organic azo compound.

**13.** A composition as defined in Claim 8 wherein said organic peroxide comprises t-butyl peroxybenzoate.

**14.** A composition as defined in Claim 1 wherein component (iv)(a) comprises a reinforcing amount of glass fibers, polyester fibers or a mixture thereof.

**15.** A composition as defined in Claim 1 wherein component (iv)(b) comprises a flame retardant amount of aluminum trihydrate.

**16.** A composition as defined in Claim 1 wherein component (iv)(c) comprises an impact improving amount of a styrene-ethylene-butylene-styrene block copolymer or a polymer having a polymerized butyl acrylate core and a styrene shell.

**17.** A shaped article of manufacture formed by melt processing a composition as defined in Claim 1 by
(1) blending powder or pellets of component (i), with liquid component (ii)(a), optionally, liquid component (ii)(b) or (ii)(c), and, optionally, component (iii);
(2) extruding the composition to a desired shape at a temperature below 150° C.; and
(3) curing component (ii)(a) and optional components (ii)(b) and (ii)(c).

18. A shaped article of manufacture formed by melt processing a composition as defined in Claim 2 by
(1) blending powder or pellets of component (i) with liquid component (ii)(a), optionally, liquid component (ii)(b) or liquid component (ii)(c); optionally component (iii) and at least one of components (iv)(a); (iv)(b) or (iv)(c); or a mixture of any of said components (iv)(a), (iv)(b) or (iv)(c);
(2) extruding the composition to a desired shape at a temperature below 150° C.; and
(3) curing component (ii)(a) and optional component (ii)(b) and optional component (ii)(c).

## Revendications

1. Composition durcissable comprenant :
(i) une résine de poly(éther de phénylène) thermoplastique sensiblement dépourvue de substituants qui sont des inhibiteurs des radicaux libres ;
(ii)(a) au moins un composé à insaturation polyvinylique seul ou de plus en combinaison avec
(ii)(b) au moins un composé à insaturation monovinylique liquide ayant une formule générale choisie parmi

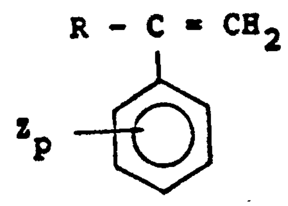

,

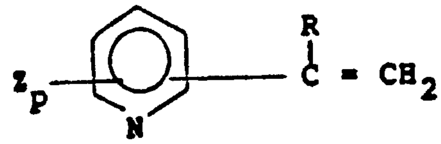

ou un mélange de ces composés, où R est un atome d'hydrogène ou un groupe méthyle, Z est un atome d'hydrogène ou d'halogène ou un groupe alkyle ou alcoxy et p est 0 ou un entier de 1 à 3, isolément, ou de plus en combinaison avec
(ii)(c) au moins un composé à insaturation monovinylique liquide copolymérisable avec le composant (ii)(b) et différent de celui-ci, lesdits composés à insaturation vinylique (ii)(a), (ii)(b) et (ii)(c) constituant de 1 à 60 % en poids de (i) et (ii)(a), (ii)(b) et (ii)(c) combinés ; et facultativement
(iii) une quantité efficace d'un catalyseur capable de former des radicaux libres pour amorcer la polymérisation des composés à insaturation vinylique (ii)(a), (ii)(b) et (ii)(c).

2. Composition durcissable selon la revendication 1, qui comprend également :
(iv)(a) une quantité efficace d'un agent de renfort ;
(iv)(b) une quantité efficace d'un agent ignifugeant ; ou
(iv)(c) une quantité efficace d'un modificateur de la résistance au choc ou une combinaison quelconque de ceux-ci.

3. Composition selon la revendication 1, dans laquelle les composés (ii)(a), (ii)(b) et (ii)(c) constituent de 15 à 40 % du poids combiné de (i) et de (ii)(a), (ii)(b) et (ii)(c).

4. Composition selon la revendication 1, dans laquelle ledit poly(éther de phénylène) est un homopolymère ou copolymère contenant des motifs structuraux de formule :

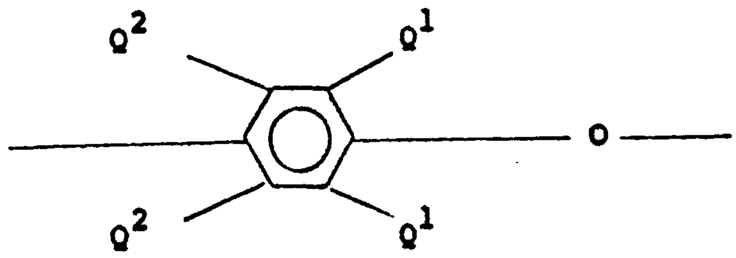

dans laquelle, pour chacun de ces motifs, indépendamment, chaque $Q^1$ est un atome d'hydrogène ou d'halogène ou un radical alkyle inférieur primaire ou secondaire ayant jusqu'à 7 atomes de carbone, un radical phényle, un radical halogénoalkyle ou un radical aminoalkyle, où au moins 2 atomes de carbone séparent l'atome d'halogène ou l'atome d'azote du noyau benzène, un radical hydrocarbonoxy ou un radical halogénohydrocarbonoxy, dans lequel au moins 2 atomes de carbone séparent l'atome d'halogène et l'atome d'oxygène ; et chaque $Q^2$ est indépendamment un atome d'hydrogène ou d'halogène ou un radical alkyle inférieur primaire ou secondaire, un radical phényle, un radical halogénoalkyle, un radical hydrocarbonoxy ou un radical halogénohydrocarbonoxy, comme défini pour $Q^1$, ledit poly(éther de phénylène) ayant des groupes terminaux choisis parmi les produits de la réaction dudit poly(éther de phénylène) avec un acide organique, un halogénure d'acide organique, un anhydride d'acide organique, un cétène ou un composé ayant plusieurs de ces groupes fonctionnels ou un mélange quelconque de ceux-ci.

5. Composition selon la revendication 1, dans laquelle ledit poly(éther de phénylène) est coiffé avec un composé répondant à la formule générale (I)-Z-(II), qui est un composé qui contient dans sa molécule à la fois un groupe (I), qui est au moins un groupe de formule

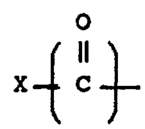

dans laquelle X est F, Cl, Br, I, OH, OR ou

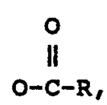

où R est H ou un radical alkyle ou aryle, et un groupe (II) qui est au moins un groupe acide carboxylique, anhydride d'acide, amide, imido, ester d'acide carboxylique, amino ou hydroxyle ; où les groupes (I) et (II) sont liés par covalence par un radical de liaison Z, qui est un radical hydrocarboné divalent.

6. Composition selon la revendication 3, dans laquelle ledit poly(éther de phénylène) est un poly(éther de 2,6-diméthyl-1,4-phénylène) ou un poly(éther de 2,6-diméthyl-co-2,3,6-triméthyl-1,4-phénylène) coiffé avec un halogénure d'acide, un anhydride d'acide ou un composé ayant des groupes fonctionnels halogénure d'acide et anhydride d'acide.

7. Composition selon la revendication 4, dans laquelle ledit poly(éther de phénylène) est coiffé avec du chlorure de benzoyle, de l'anhydride acétique, de l'anhydride maléique ou du chlorure de l'anhydride de l'acide trimellitique.

8. Composition selon la revendication 1, dans laquelle le composant (ii)(a) comprend un polyester insaturé, un hydrocarbure aromatique polyvinylique ou un composé polyacrylique ou polyméthacrylique.

9. Composition selon la revendication 8, dans laquelle le composant (ii)(a) comprend un poly(fumarate de bisphénol-A), le divinylbenzène ou le méthacrylate de diméthylène.

10. Composition selon la revendication 1, dans laquelle le composant (ii)(b) comprend un hydrocarbure vinylaromatique et le composant (ii)(c) comprend un fumarate de dialkyle ou un maléimide N-substitué.

11. Composition selon la revendication 10, dans laquelle le composant (ii)(b) comprend du styrène et le composant (ii)(c) comprend du fumarate de diéthyle ou du N-phénylmaléimide.

12. Composition selon la revendication 1, dans laquelle le composant (iii) comprend un peroxyde organique ou un composé organique azoïque.

13. Composition selon la revendication 8, dans laquelle ledit peroxyde organique comprend du peroxybenzoate de tert-butyle.

14. Composition selon la revendication 1, dans laquelle le composant (iv)(a) comprend une quantité de renfort de fibres de verre, de fibres de polyester ou d'un de leurs mélanges.

15. Composition selon la revendication 1, dans laquelle le composant (iv)(b) comprend une quantité ignifugeante d'alumine hydratée.

16. Composition selon la revendication 1, dans laquelle le composant (iv)(c) comprend une quantité améliorant la résistance au choc d'un copolymère séquencé de styrène-éthylène-butylène-styrène ou d'un polymère ayant un centre d'acrylate de butyle polymérisé et une enveloppe de styrène polymérisé.

17. Article manufacturé façonné formé par mise en oeuvre à l'état fondu d'une composition selon la revendication 1 par
(1) mélange d'une poudre ou de granules du composant (i) avec le composant liquide (ii)(a), éventuellement le composant (ii)(b) liquide ou (ii)(c) liquide, et éventuellement le composant (iii) ;
(2) extrusion de la composition à la forme désirée à une température inférieure à 150 °C ; et
(3) durcissement du composant (ii)(a) et des composants facultatifs (ii)(b) et (ii)(c).

18. Article manufacturé façonné formé par mise en oeuvre à l'état fondu d'une composition comme défini dans la revendication 2 par
(1) mélange d'une poudre ou de granules du composant (i) avec le composant liquide (ii)(a), éventuellement le composant (ii)(b)liquide ou (ii)(c) liquide ; éventuellement le composant (iii) et au moins un des composants (iv)(a), (iv)(b) ou (iv)(c) ; ou un mélange quelconque desdits composants (iv)(a), (iv)(b) ou (iv)(c) ;
(2) extrusion de la composition à la forme désirée à une température inférieure à 150 °C ; et
(3) durcissement du composant (ii)(a) et du composant facultatif (ii)(b) et du composant facultatif (ii)-(c).

**Patentansprüche**

1. Härtbare Zusammensetzung enthaltend:
(i) ein thermoplastisches Polyphenylenätherharz welches im wesentlichen frei ist von Substituenten, welche als Inhibitor für freie Radikale wirken;
(ii) (a) wenigstens eine ungesättigte Polyvinylverbindung allein oder in weiterer Kombination mit
(ii) (b) wenigstens einer flüssigen ungesättigten Monovinylverbindung mit der allgemeinen Formel ausgewählt aus

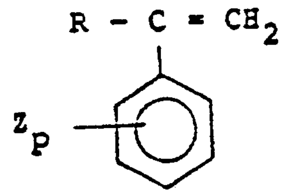

,

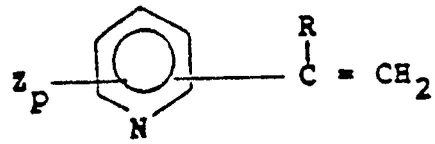

oder einer Mischung dieser Verbindungen, worin R Wasserstoff oder Methyl ist, Z Wasserstoff, Halogen, Alkyl oder Alkoxy ist und p 0 oder eine ganze Zahl von 1 bis 3 ist, allein oder in weiterer Kombination mit,

(ii) (c) wenigstens einer flüssigen ungesättigten Monovinylverbindung, die copolmerisierbar und von dem Bestandteil (ii) (b) unterschiedlich ist, wobei die ungesättigten Vinylverbindungen (ii) (a), (ii) (b) und (ii) (c) 1 bis 60 Gew.-% des Gesamtgewichtes von (i) und (ii) (a), (ii) (b) und (ii) (c) umfaßt und fakultativ (iii) eine wirksame Menge eines Katalysators, der in der Lage ist freie Radikale zu erzeugen, um die Polymerisation der ungesättigten Vinylverbindungen (ii) (a), (ii) (b) und (ii) (c) zu initiieren.

**2.** Härtbare Zusammensetzung nach Anspruch 1, welche weiterhin umfaßt:
(iv) (a) eine wirksame Menge eines Verstärkungsmittels,
(iv) (b) eine wirksame Menge eines flammhemmenden Mittels, oder
(iv) (c) eine wirksame Menge eines Schlagmodifizierungsmittels oder einer Kombination aus beliebigen der vorgenannten Stoffe.

**3.** Zusammensetzung nach Anspruch 1, worin die Verbindungen (ii) (a), (ii) (b) und (ii) (c) 15 bis 40 Gew.-% des vereinigten Gewichtes von (i) und (ii) (a), (ii) (b) und (ii) (c) umfaßt.

**4.** Zusammensetzung nach Anspruch 1, worin der Polyphenylenäther ein Homopolymer oder Copolymer ist enthaltend die Struktureinheiten der Formel

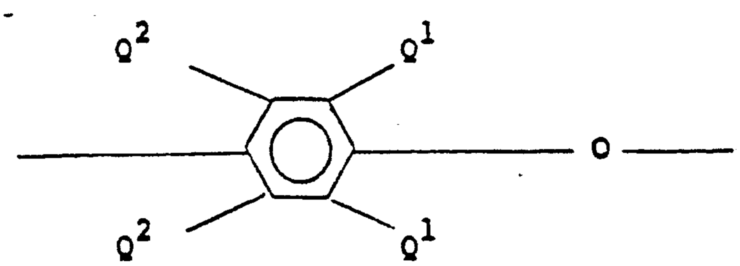

in welcher für jeder dieser Einheiten jedes $Q^1$ unabhängig Wasserstoff, Halogen, primäres oder sekundäres niederes Alkyl mit bis zu 7 Kohlenstoffatomen, Phenyl, Halogenalkyl, Aminoalkyl, worin wenigstens 2 Kohlenstoffatome das Halogen oder das Stickstoffatom von dem Benzolring trennt, Hydrocarbonoxy oder Halogenhydrocarbonoxy, worin wenigstens 2 Kohlenstoffatome das Halogen und das Sauerstoffatom trennen, sind und jedes $Q^2$ unabhängig Wasserstoff, Halogen, primäres oder sekundäres niederes Alkyl, Phenyl, Halogenalkyl, Hydrocarbonoxy oder Halogenhydrocarbonoxy, wie vorstehend für $Q^1$ definiert, sind, wobei der Polyphenylenäther Endgruppen aufweist, die aus den Reaktionsprodukten des Polyphenylenäthers mit einer organischen Säure, einem organischen Säurehalogenid, einem organischen Säureanhydrid, einem Keten oder einer Verbindung mit mehr als einer der funktionellen Gruppen oder einer Mischung aus beliebigen der vorgenannten Gruppen ausgewählt sind.

5. Zusammensetzung nach Anspruch 1, worin der Polyphenylenäther mit einer Verbindung der allgemeinen Formel (I)-Z-(II) endverschlossen ist, welche eine Verbindung darstellt, die in ihrem Molekül sowohl die Gruppe (I) aufweist, welche wenigstens eine Gruppe mit der Formel

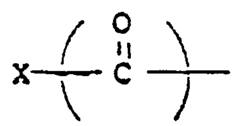

besitzt, worin X gleich F, Cl, Br, I, OH, OR oder

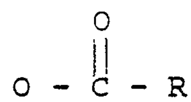

ist, worin R gleich H oder ein Alkyl- oder Arylrest ist, sowie eine Gruppe (II) welche wenigstens eine Carbonsäure, Säureanhydrid, Säureamid, Imido, Carboxylsäureester, Amino oder Hydroxylgruppe aufweist, worin die Gruppen (I) und (II) kovalent durch die Bindung Z, die ein zweiwertiger Kohlenwasserstoffrest ist, verbunden sind.

6. Zusammensetzung nach Anspruch 3, worin der Polyphenylenäther ein Poly(2,6-dimethyl-1,4-phenylenäther) oder ein Poly(2,6-dimethyl-co-2,3,6-trimethyl-1,4-phenylenäther) ist, mit einem Säurehalogenid, Säureanhydrid oder einer Verbindung, die sowohl Säurehalogenid und Säureanhydrid-funktionelle Gruppen aufweist, endverschlossen ist.

7. Zusammensetzung nach Anspruch 4, worin der Polyphenylenäther mit Benzoylchlorid, Essigsäureanhydrid, Maleinsäureanhydrid oder Trimellitsäureanhydridsäurechlorid endverschlossen ist.

8. Zusammensetzung nach Anspruch 1, worin der Bestandteil (ii) (a) einen poly ungesättigten Polyester, einen Polyvinyl aromatischen Kohlenwasserstoff oder eine Poly(acrylyl oder meth-acrylyl) Verbindung umfaßt.

9. Zusammensetzung nach Anspruch 8, worin der Bestandteil (ii) (a) ein Poly(Bisphenol-A-fumarat), Divinylbenzol oder Dimethylenmethacrylat umfaßt.

10. Zusammensetzung nach Anspruch 1, worin der Bestandteil (ii) (b) einen vinylaromatischen Kohlenwasserstoff und der Bestandteil (ii) (c) ein Dialkylfumarat oder ein N-substituiertes Maleimid umfaßt.

11. Zusammensetzung nach Anspruch 10, worin der Bestandteil (ii) (b) Styrol und der Bestandteil (ii) (c) Diäthylfumarat oder N-phenylmaleimid umfaßt.

12. Zusammensetzung nach Anspruch 1, worin der Bestandteil (iii) ein organisches Peroxid oder eine organische Azoverbindung umfaßt.

13. Zusammensetzung nach Anspruch 8, worin das organische Peroxid t-Butylperoxybenzoat umfaßt.

14. Zusammensetzung nach Anspruch 1, worin der Bestandteil (iv) (a) eine verstärkende Menge Glasfasern, Polyesterfasern oder eine Mischung derselben umfaßt.

15. Zusammensetzung nach Anspruch 1, worin der Bestandteil (v) (b) eine flammhemmende Menge von Aluminiumtrihydrat umfaßt.

16. Zusammensetzung nach Anspruch 1, worin der Bestandteil (v) (c) eine schlagverbessernde Menge eines Styrol-äthylen-butylen-styrol-Blockcopolymer oder eines Polymeren mit einem polymerisierten

Butylacrylatkern und einem Styrolmantel umfaßt.

17. Ausgeformter Gegenstand, der durch Schmelzverarbeitung einer Zusammensetzung nach Anspruch 1 durch
    (1) Mischen des Pulvers oder der Pellets des Bestandteils (i) mit dem flüssigen Bestandteil (ii) (a), fakultativ dem flüssigen Bestandteil (ii) (b) oder (ii) (c) und fakultativ dem Bestandteil (iii);
    (2) Extrudieren der Zusammensetzung zu einer gewünschten Form bei einer Temperatur unter 150 °C und
    (3) Aushärten des Bestandteils (ii) (a) und fakultativ der Komponenten (ii) (b) und (ii) (c) gebildet wird.

18. Ausgeformter Gegenstand der durch Schmelzverarbeitung einer Zusammensetzung nach Anspruch 2 durch
    (1) Mischen des Pulvers oder der Pellets des Bestandteils (i) mit dem flüssigen Bestandteil (ii) (a), fakultativ dem flüssigen Bestandteil (ii) (b) oder dem flüssigen Bestandteil (ii) (c), fakultativ dem Bestandteil (iii) und wenigstens einem der Bestandteile (iv) (a), (iv) (b) oder (iv) (c) oder einer Mischung aus beliebigen der vorgenannten Bestandteile (iv) (a), (iv) (b) oder (iv) (c),
    (2) Extrudieren der Zusammensetzung zu einer gewünschten Form bei einer Temperatur unter 150 °C und
    (3) Aushärten des Bestandteils (ii) (a) und fakultativ des Bestandteils (ii) (b) und fakultativ des Bestandteils (ii) (c), ausgeformt wird.